(19) **Europäisches Patentamt European Patent Office Office européen des brevets**

(11) **EP 2 338 712 B1**

(12) **FASCICULE DE BREVET EUROPEEN**

(45) Date de publication et mention de la délivrance du brevet:
**18.07.2012 Bulletin 2012/29**

(51) Int Cl.:
***B60H 1/00*** *(2006.01)*  ***B60H 1/22*** *(2006.01)*

(21) Numéro de dépôt: **10193921.3**

(22) Date de dépôt: **07.12.2010**

(54) **Optimisation d'une capacité de chauffage globale d'un système de climatisation**

Klimaanlagengesamtwärmeleistungsfähigkeitsoptimierung

Optimization of a general warming capacity of an air conditioning system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2009 FR 0906128**

(43) Date de publication de la demande:
**29.06.2011 Bulletin 2011/26**

(73) Titulaire: **Valeo Systèmes Thermiques 78321 Le Mesnil Saint Denis (FR)**

(72) Inventeurs:
• **Yahia, Mohamed 75005, PARIS (FR)**
• **Nicolas, Bertrand 78990, ELANCOURT (FR)**
• **Hammi, Samy 75015, PARIS (FR)**

(74) Mandataire: **Vieillevigne, Sébastien Nicolas Bernard Valeo Systèmes Thermiques SAS 8, rue Louis Lormand La Verrière - B.P. 513 78321 Le Mesnil-Saint-Denis Cedex (FR)**

(56) Documents cités:
**DE-A1- 10 241 717     JP-A- 11 235 919 US-A- 5 501 267     US-A- 5 537 831 US-A- 6 118 099**

**EP 2 338 712 B1**

**Description**

La présente invention se rapporte au domaine général des procédés de contrôle des systèmes de climatisation pour véhicule automobile. Plus précisément, l'invention concerne un procédé de contrôle pour un système de climatisation comprenant une boucle thermique fonctionnant selon un mode dit « pompe a chaleur » comprenant au moins un échangeur de chaleur externe, un échangeur de chaleur interne ou un radiateur échangeur eau-air, un compresseur et un évaporateur, la boucle thermique fournissant une capacité de chauffage dite de la boucle thermique, et, en complément, le système de climatisation comprenant un dispositif de chauffage électrique fournissant une capacité de chauffage complémentaire dite du dispositif électrique. Les systèmes de climatisation concernés par l'invention comportent en outre un dispositif de contrôle dans lequel est implémenté le procédé selon l'invention.

Dans de tels systèmes de climatisation, généralement implémentées dans des véhicules hybrides ou électriques, la capacité de chauffage totale peut être fournie par une boucle thermique fonctionnant en pompe à chaleur complétée par un ou des dispositifs électriques complémentaires de chauffage. Un tel système est connu par exemple de US 5 501 267.

L'invention concerne plus spécifiquement les stratégies permettant de déterminer le pourcentage d'utilisation du ou des dispositifs électriques complémentaires et de la boucle thermique fonctionnant en principe de pompe à chaleur afin d'obtenir un coefficient de performance optimal pour le système de climatisation.

Il est connu que les dispositifs électriques de chauffage disposent d'un coefficient de performance égal à 1 alors que les boucles thermiques fonctionnant selon le principe de pompe à chaleur disposent d'un coefficient de performance généralement bien supérieur à 1 mais décroissant très fortement dès lors que la température du milieu extérieur dans lequel la chaleur est pompée diminue.

Dans les systèmes de climatisation visés par l'invention, le dispositif électrique de chauffage est destiné à venir en support de la boucle thermique fonctionnant en principe de pompe à chaleur, en particulier lorsque le coefficient de performance de la boucle thermique chute pour des températures extérieures trop basses.

Objet et résumé de l'invention

La présente invention a donc pour but principal de permettre d'optimiser l'utilisation d'un dispositif électrique de chauffage complémentaire dans un système de climatisation en proposant que le procédé de contrôle selon l'invention comprenne les étapes suivantes :

- réception d'une température de consigne,
- détermination de la vitesse de l'air au niveau de l'échangeur de chaleur externe,
- détermination de la température d'un flux d'air à l'intérieur du système de climatisation,
- détermination du débit d'air sur l'échangeur de chaleur, interne ou du radiateur échangeur eau-air
- calcul d'une capacité globale de chauffage à partir de la consigne de température, de la température du flux d'air et du débit d'air sur l'échangeur de chaleur interne
- détermination d'une capacité de chauffage de la boucle thermique
- comparaison de la capacité de chauffage de la boucle thermique à la capacité globale de chauffage
- réglage de la capacité de chauffage du dispositif électrique complémentaire, le cas échéant, en complément de la capacité de chauffage de la boucle thermique si la capacité de chauffage de la boucle thermique est inférieure à la capacité globale de chauffage.

L'invention permet ainsi de déterminer la valeur de la capacité de chauffage de la boucle thermique permettant d'obtenir le coefficient de performance optimal et ce, en fonction de la capacité de chauffage globale demandée au système de climatisation.

Avantageusement, le procédé comprend une étape dans laquelle on effectue un plafonnement de la capacité de chauffage de la boucle thermique à la capacité de chauffage de la boucle thermique annulant la dérivée par rapport à cette capacité de chauffage de la boucle thermique du coefficient global de performance dans le cas où cette dérivée s'annule pour une capacité de chauffage de la boucle thermique inférieure à la capacité globale calculée.

Selon un mode de réalisation avantageux de l'invention, le procédé comprend une étape préalable d'estimation de deux coefficients a et b d'une approximation linéaire du coefficient de performance de la boucle thermique en fonction de la capacité de chauffage de la boucle thermique, ces coefficients étant estimés, chacun, en fonction des composants de la boucle thermique, pour au moins une pluralité de vitesses de l'air dans l'échangeur de chaleur externe, une pluralité de températures du flux d'air et une pluralité de débits massique d'air dans l'échangeur de chaleur interne, le procédé comprenant alors, après les étapes de mesures, une étape de détermination, parmi les coefficients estimés, des coefficients de l'approximation du coefficient de performance de la boucle thermique correspondants aux paramètres mesurés, la capacité de chauffage du système thermique étant alors plafonnée à $(b^{1/2}-b)/a$.

Une telle réalisation est particulièrement simple à mettre en oeuvre à partir du moment où il est possible de stocker les coefficients a et b pour la pluralité de paramètres susceptibles de varier lors du fonctionnement de la boucle thermique.

Selon une caractéristique particulière de l'invention, le système de climatisation comprenant une boucle thermique air-eau et disposant d'un dispositif électrique de chauffage complémentaire de l'eau, les coefficients a et b sont également estimés en fonction de la capacité de chauffage globale requise.

Cette caractéristique tient compte des particularités de fonctionnement d'un dispositif électrique de chauffage complémentaire à eau.

Dans les applications, l'invention est susceptible de concerner des systèmes de climatisation choisis parmi les systèmes de climatisation comprenant une boucle thermique air-air et munis d'un dispositif électrique de chauffage de l'air, les systèmes de climatisation comprenant une boucle thermique air-eau et munis d'un dispositif électrique de chauffage de l'air, les systèmes de climatisation comprenant une boucle thermique air-eau et munis d'un dispositif électrique de chauffage de l'eau avec ou sans dispositif électrique de chauffage de l'air.

Tous ces types d'appareils pompes à chaleur peuvent être concernés par l'invention dans la mesure où il est possible de recourir à un dispositif électrique de chauffage complémentaire ayant un coefficient de performance égal à 1 en complément du fonctionnement du système thermique.

Selon une implémentation préférée, les différentes étapes du procédé selon l'invention sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes du procédé selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc), un disque dur, une mémoire flash, une clé USB etc.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

<u>Brève description des dessins</u>

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 montre schématiquement la structure d'un système de climatisation air-air dans laquelle l'invention est susceptible d'être implémentée ;
- la figure 2 montre la structure d'un système de climatisation air-eau dans laquelle l'invention est susceptible d'être implémentée ;
- la figure 3 montre schématiquement la structure d'un système de climatisation air-eau dans laquelle l'invention est susceptible d'être implémentée ;
- la figure 4 montre un diagramme bloc d'un dispositif de contrôle du fonctionnement du système de climatisation selon l'invention ;
- la figure 5 est un organigramme représentant le procédé selon l'invention ;
- la figure 6 donne un exemple de variation du coefficient de performance d'une boucle thermique par rapport à la capacité thermique fournie par la boucle thermique ;
- la figure 7 montre un exemple d'évolution du coefficient de performance global du système de climatisation pour une capacité globale de 3 550 watts en fonction du pourcentage de la capacité de chauffage fournie par la boucle thermique ;
- la figure 8 montre des exemples d'évolution du coefficient de performance global en fonction du pourcentage de capacité de chauffage fournie par la boucle thermique pour trois capacités globales de chauffage différentes.

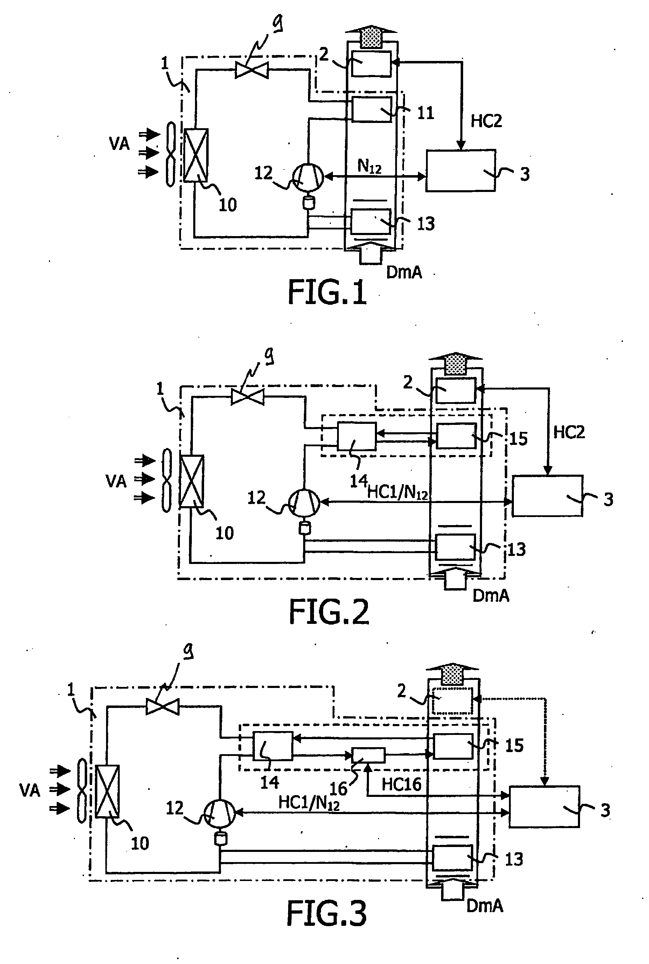

La figure 1 représente schématiquement un premier type de système de climatisation dans laquelle le procédé, selon l'invention, peut être implémenté.

Le système de climatisation comprend une boucle thermique 1 comprenant au moins un échangeur de chaleur externe 10, un échangeur de chaleur interne 11, un compresseur 12, un dispositif de détente 9 et un évaporateur 13. La boucle thermique est du type air-air. On entend par « air-air » le fait que la chaleur produite par la boucle thermique 1 est directement délivrée à un flux d'air traversant le système de climatisation. La boucle thermique fonctionne selon un mode dit « pompe à chaleur ». On entend par « pompe à chaleur » le fait que la boucle thermique produit des calories destinées à chauffer le flux d'air traversant le système de climatisation. L'échangeur de chaleur interne 11 fonctionne dans ce mode pompe à chaleur comme un condenseur.

Le système de climatisation comprend en outre un dispositif électrique de chauffage complémentaire 2 destiné à chauffer le flux d'air traversant le système de climatisation. Le système de climatisation comprend enfin un dispositif de contrôle 3 dans lequel est implémenté le procédé selon l'invention.

Lors du fonctionnement du système de climatisation, l'air arrive à la température extérieure au niveau de l'échangeur de chaleur externe 10 avec une vitesse VA, cette circulation étant éventuellement au moins partiellement générée par un ventilateur. La vitesse de l'air VA sur l'échangeur de chaleur externe 10 dépend de la vitesse du véhicule et de la tension appliquée au ventilateur.

En même temps, un débit massique d'air DmA du flux d'air circule successivement à travers l'évaporateur 13, l'échangeur de chaleur interne 11 et le dispositif électrique complémentaire de chauffage 2. Cette circulation matérialise le circuit de ventilation, climatisation, chauffage du système de climatisation. Le flux d'air entrant à l'intérieur du système de climatisation est à une température Tfa. Lorsque le système de climatisation fonctionne en mode recyclage d'air, la température Tfa est celle du flux d'air recyclé Trecy. Lorsque le système de climatisation fonctionne en mode air extérieur, la température Tfa est celle du flux d'air extérieur Text.

A la sortie de cette circulation, c'est-à-dire à la sortie du système de climatisation, le flux d'air est alors à une température supérieure à celle observée à l'entrée de la circulation au niveau de l'évaporateur.

Le dispositif de contrôle 3 permet de contrôler la capacité de chauffage de la boucle thermique 1, en envoyant des consignes de vitesse du compresseur $N_{12}$ à destination de celui-ci.

Le dispositif de contrôle 3 permet en outre, selon l'invention, de commander le fonctionnement du dispositif électrique complémentaire de chauffage 2 en envoyant un signal de commande $HC_2$ de la capacité de chauffage devant être généré par ce dispositif complémentaire 2.

La figure 2 représente schématiquement un système de climatisation comprenant, au lieu de l'échangeur de chaleur interne 11, un circuit à eau, entourée de tirets, composée classiquement d'un condenseur à eau 14 et un radiateur échangeur air-eau 15. La boucle thermique 1 est alors du type air-eau. On entend par « air-eau » le fait que les calories produites par la boucle thermique 1 sont transférées au flux d'air traversant le système de climatisation via le circuit à eau comprenant le condenseur à eau 14 et le radiateur échangeur air-eau 15.

Lors du fonctionnement de ce système de climatisation, le flux d'air est véhiculé avec un débit massique DmA et traverse l'évaporateur 13, le radiateur échangeur air-eau 15 et le dispositif complémentaire de chauffage 2.

De nouveau ici, le dispositif de contrôle 3 est apte à contrôler le fonctionnement du compresseur 12 ainsi que le fonctionnement du dispositif complémentaire de chauffage électrique à air 2, de manière similaire à ce qui est prévu dans le système de climatisation représenté sur la figure 1.

La figure 3 représente un système de climatisation air-eau disposant d'un dispositif de chauffage électrique complémentaire 16, apte à chauffer l'eau dans le circuit à eau. Le dispositif électrique de chauffage de l'eau 16 est ainsi généralement inséré entre le condenseur à eau 14 et le radiateur-échangeur air-eau 15.

Le dispositif de contrôle 3 est alors apte à contrôler le fonctionnement du compresseur 12 et également à contrôler la capacité de chauffage HC16 du dispositif complémentaire de chauffage de l'eau 16.

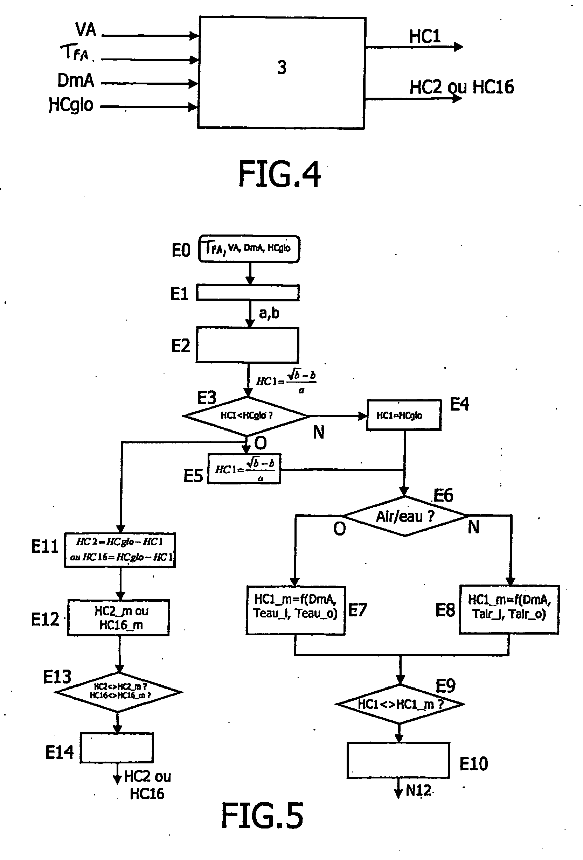

La figure 4 montre schématiquement un diagramme bloc du dispositif de contrôle 3 dans lequel est implémenté le dispositif selon l'invention. Selon l'invention, ce dispositif de contrôle 3 reçoit des paramètres de fonctionnement du système de climatisation. En particulier, pour la mise en oeuvre de l'invention, une température de consigne Tcons donnée par l'utilisateur, la température du flux d'air Tfa, le débit massique d'air DmA traversant l'évaporateur 13, l'échangeur de chaleur interne 11 ou, dans le cas d'une boucle thermique air-eau, le radiateur échangeur eau-air 15, et le dispositif électrique de chauffage complémentaire 2. Le dispositif de contrôle reçoit également la vitesse de l'air au niveau de l'échangeur de chaleur externe VA.

Enfin, le dispositif de contrôle 3 doit également recevoir une capacité de chauffage globale HCglo nécessaire pour atteindre une température de consigne T cons donnée par l'utilisateur.

La capacité de chauffage globale HCglo est généralement déterminée par calcul à partir d'une valeur de température de consigne Tcons donnée par l'utilisateur.

Selon l'invention, à partir de la détermination des paramètres de fonctionnement de la boucle thermique et de la valeur de la température de consigne Tcons, le dispositif de contrôle 3 est capable de calculer une répartition de la capacité de chauffage entre la boucle thermique 1 et le dispositif de chauffage électrique complémentaire 2.

Ainsi, en sortie du dispositif de contrôle 3, sont disponibles deux signaux de commande pour régler la capacité de chauffage de la boucle thermique HC1 et la capacité de chauffage du dispositif électrique de chauffage complémentaire HC2.

Pour cela, le dispositif de contrôle 3 utilise la dépendance du coefficient de performance global du système de climatisation, noté COPglo en fonction de la capacité de chauffage de la boucle thermique HC1.

Ainsi que cela est bien connu, pour les mêmes conditions opératoires, l'évolution du coefficient de performance d'une boucle thermique fonctionnant selon le principe de la pompe à chaleur décroit proportionnellement à la capacité de chauffage fournie par cette boucle thermique.

Le procédé mis en oeuvre au sein du dispositif de contrôle 3 permet de déterminer la proportion d'utilisation de la boucle thermique et du dispositif électrique de chauffage complémentaire pour obtenir le coefficient de performance global optimal.

Aussi, dans le cas où un dispositif électrique complémentaire de chauffage de l'air 2 est utilisé, le coefficient de performance global s'exprime de la manière suivante :

$$COPglo = \frac{HCglo}{P12 + P2}$$

Dans cette expression, $P_{12}$ est la consommation électrique du compresseur, $P_2$ est la consommation électrique du dispositif électrique de chauffage complémentaire. Dans le cas où un dispositif électrique de chauffage d'eau 16 est utilisé, une consommation P16 est alors présente au dénominateur en lieu et place de P2.

En fonction des coefficients de performance de la boucle thermique COP1 et du dispositif électrique COP2, il est alors possible d'exprimer les consommations électriques du compresseur 12 et du dispositif de chauffage complémentaire électrique 2, on obtient alors l'expression suivante :

$$COPglo = \frac{COP1 . COP2}{\dfrac{HC1}{HCglo}COP2 + \dfrac{HC2}{HCglo}COP1}$$

dans laquelle HC1 et HC2 sont les capacités de chauffage offertes par la boucle thermique 1 et le dispositif électrique de chauffage complémentaire 2.

Le coefficient de performance des dispositifs électriques COP2 ou, le cas échéant COP16, généralement unitaire sera considéré égale à 1 dans la suite. Le coefficient de performance de la boucle thermique COP1 est classiquement une fonction de la capacité de chauffage HC1 du système thermique 1.

Conformément à l'invention, cette expression du coefficient de performance globale COPglo est alors dérivée de manière à déterminer pour quelle valeur de la capacité de chauffage de la boucle thermique HC1, cette dérivée s'annule.

L'expression suivante est donc la dérivée du coefficient de performance globale par rapport à la capacité de chauffage de la boucle thermique HC1.

$$(COPglo)' = \frac{COP1^2 . HCglo + HC1 . HCglo . COP1' - COP1 . HCglo}{\left(\dfrac{HC1}{HCglo} + \dfrac{HC2}{HCglo}COP1\right)^2}$$

L'annulation de cette dérivée correspond donc à la résolution de l'équation suivante :

$$COP1^2 . HCglo + HC1 . HCglo . COP1' - COP1 . HCglo = 0$$

ce qui revient également à résoudre l'équation :

$$\left(\frac{HC1}{COP1}\right)' = 1$$

La résolution de cette équation donne alors une valeur de HC1 permettant d'obtenir un optimum de fonctionnement du système de climatisation avec une répartition optimale de la capacité de chauffage entre la boucle thermique 1 et le dispositif de chauffage complémentaire 2.

Dans un mode de réalisation avantageux de l'invention décrit dans la suite, une approximation linéaire du coefficient de performance de la boucle thermique COP1 est utilisée.

Dans le cas d'un système de climatisation utilisant un dispositif électrique de chauffage complémentaire du chauffage de l'air 2, le coefficient de performance de la boucle thermique COP1 est uniquement fonction de la capacité de chauffage de la boucle thermique HC1 :

$$COP1 = f(HC1)$$

Dans le cas d'un système de climatisation utilisant un dispositif complémentaire électrique de chauffage de l'eau 16, le coefficient de performance de la boucle thermique COP1 est à la fois fonction de la capacité de chauffage de la boucle thermique HC1 et de la capacité de chauffage globale requise HCglo.

$$COP1 = f(HC1; HCglo)$$

En effet, la capacité de chauffage globale HCglo a un effet sur la température de l'eau à l'entrée du condenseur à eau 14 puisque cette valeur de la capacité de chauffage globale HCglo définit le niveau de la température de l'eau à l'entrée du condenseur à eau 14 et à la sortie du dispositif électrique de chauffage complémentaire 16.

Malgré ces différences, il est possible pour les deux types de dispositif électrique de chauffage complémentaire d'approximer le coefficient de performance de la boucle thermique COP1 selon l'équation suivante dans laquelle les deux coefficients a et b définissent l'évolution du coefficient de performance COP1.

$$COP1 = a \cdot HC1 + b$$

Ces coefficients sont stockés dans une base de données accessible au dispositif de contrôle 3. Ces coefficients a et b sont déterminés en fonction des composants de la boucle thermique mis en oeuvre. Ils sont également déterminés et stockés pour des pluralités de vitesses de l'air VA, de températures Tfa et de débits massiques DmA de du flux d'air dans le cas de l'utilisation d'un dispositif électrique complémentaire à air.

Dans le cas d'un système de climatisation utilisant un dispositif de chauffage complémentaire électrique de l'eau 16, les coefficients a et b sont en outre dépendants de la capacité de chauffage global HCglo du système de climatisation.

Les coefficients a et b sont donc déterminés et stockés pour des pluralités de valeurs déterminables des conditions d'opération du système de climatisation.

Aussi, le dispositif de contrôle 3 comprend avantageusement des moyens de stockage, par exemple sous forme de table de données, pour stocker les coefficients a et b en fonction d'au moins 3 voir 4 paramètres relatifs aux conditions opératoires du système de climatisation. Cela permet de fournir très rapidement les valeurs des coefficients a et b au dispositif de contrôle 3.

L'équation ci-dessus prend alors la forme suivante :

$$\left(\frac{HC1}{a \cdot HC1 + b}\right)' = 1$$

Cette équation est résolue pour la valeur suivante de la capacité de chauffage de la boucle thermique :

$$HC1 = \frac{\sqrt{b} - b}{a}$$

Ainsi, cette valeur de la capacité de chauffage HC1 de la boucle thermique 1 est la capacité de chaleur maximale pour laquelle la boucle thermique 1 permet de produire le coefficient de performance globale COPglo maximal.

La capacité de chauffage du dispositif électrique de chauffage complémentaire HC2 est alors calculée par le dispositif de contrôle 3 selon l'équation suivante :

$$HC2 = HCglo - HC1$$

La figure 5 est un organigramme montrant le déroulement du procédé selon l'invention.

Dans une étape E0, le procédé reçoit des informations sur la température Tfa, la vitesse de l'air VA au niveau de l'échangeur de chaleur externe 10 et le débit massique de l'air DmA du flux d'air dans le système de climatisation, il reçoit aussi une information relative à la capacité de chauffage globale HCglo, généralement calculée à partir d'une température de consigne Tcons fournie par l'utilisateur.

Selon l'invention, le coefficient de performance de la boucle thermique COP1 est exprimé sous la forme d'une approximation linéaire, le procédé détermine alors, dans une étape E1, deux coefficients a et b permettant d'exprimer le coefficient de performance de la boucle thermique COP1 en fonction de la capacité de chauffage de la boucle thermique HC1 de manière linéaire.

Les valeurs de a et b sont déterminées par lecture dans une base de données remplie en fonction des paramètres de fonctionnement du système de climatisation et, dans le cas d'un système de climatisation air-eau utilisant un dispositif électrique complémentaire de chauffage de l'eau, en fonction de la capacité de chauffage globale requise.

Dans une étape E2, la valeur optimale de la capacité de chauffage de la boucle thermique HC1 est alors calculée.

Dans l'étape E3, le procédé vérifie si la capacité de chauffage de la boucle thermique HC1 optimal est inférieure à la capacité de chauffage globale correspondante à la consigne de l'utilisateur.

Dans le cas (N) où la capacité de chauffage de la boucle thermique HC1 permettant d'annuler la dérivée du coefficient de performance globale COPglo en fonction de la capacité de chauffage de la boucle thermique HC1 n'est pas inférieure à la capacité de chauffage globale HCglo, alors, dans une étape E4, la capacité de chauffage de la boucle thermique HC1 comble entièrement les besoins de capacité de chauffage globale HCglo tels que requis par l'utilisateur.

Dans le cas (O) où la capacité de chauffage de la boucle thermique HC1 permettant d'annuler la dérivée du coefficient de performance global COPglo est inférieure à la capacité de chauffage globale requise HCglo, la valeur de la capacité de chauffage de la boucle thermique HC1 est fixée dans une étape E5 à la valeur de la capacité de chauffage optimale déterminée dans l'étape E2.

Le réglage du fonctionnement du système de climatisation dépend alors du type de boucle thermique utilisé, à savoir une boucle thermique air-eau ou une boucle thermique air-air. Cette question est représentée schématiquement sur la figure 5 par l'étape E6. Dans le cas où la boucle thermique fonctionne selon un principe air-eau, alors un calcul d'une valeur de capacité de chauffage de la boucle thermique HC1_m est calculé en fonction du débit massique du flux d'air DmA, de la température de l'eau Teau_i en entrée du condenseur à eau 14 et de la température de l'eau Teau_o en sortie du condenseur à eau 14 dans une étape E7.

Dans le cas où il s'agit d'une boucle thermique air-air, il est également calculé une valeur de la capacité de chauffage de la boucle thermique HC1_m cette fois en fonction du débit massique du flux d'air DmA, de la température du flux d'air Tair_i à l'entrée de l'échangeur de chaleur interne 11 et la température du flux d'air Tair_o à la sortie de l'échangeur de chaleur, interne 11 dans une étape E8.

Dans les deux cas, le procédé comprend une étape de comparaison entre la valeur calculée de la capacité de chauffage de la boucle thermique HC1_m avec la valeur de commande de la capacité de chauffage de la boucle thermique HC1.

Une étape E10 calcule alors une valeur de commande de la vitesse du compresseur N12 qui est ensuite envoyée vers le compresseur 12.

Dans le cas où la capacité de chauffage de la boucle thermique HC1 est inférieure à la capacité de chauffage global requise HCglo, en parallèle du fonctionnement de la boucle thermique 1 et du réglage de sa capacité de chauffage HC1, a aussi lieu un calcul de la capacité de chauffage de consigne pour le dispositif électrique de chauffage complémentaire HC2 ou HC16.

Cela est illustré sur la figure 5 par les étapes suivantes au cours desquelles, successivement, dans l'étape E11, la valeur de consigne de la capacité de chauffage du dispositif électrique complémentaire HC2 ou HC16 est calculée en fonction de la capacité de chauffage de la boucle thermique HC1 et de la capacité de chauffage globale requise HCglo.

$$HC2 \quad ou \quad HC16 = HCglo - HC1$$

Dans l'étape E12, une valeur réelle de la capacité de chauffage du dispositif électrique de chauffage complémentaire HC2_m ou HC16_m est calculée en fonction des paramètres déterminés du fonctionnement du système de climatisation.

Ensuite, dans une étape E13, le procédé compare la valeur calculée dans l'étape E12 à la valeur calculée dans l'étape E11.

Dans une étape E14, la différence éventuelle entre ces grandeurs est utilisée pour calculer des valeurs de consigne HC2 ou HC16 qui sont ensuite envoyées par le dispositif de contrôle 3 à destination soit du dispositif électrique complémentaire de chauffage de l'air 2, soit à destination du dispositif électrique de chauffage de l'eau complémentaire 16.

On voit bien sur l'organigramme de la figure 5 que, dans le cas où la valeur de la capacité de chauffage globale requise HCglo est plus grande que la valeur de la capacité de chauffage de la boucle thermique HC1 optimal obtenu par annulation de la dérivée du coefficient de performance COPglo, la capacité de chauffage additionnelle est fournie par le dispositif complémentaire de chauffage électrique 2 ou 16.

A l'opposé, si la capacité de chauffage globale HCglo est inférieure à la capacité de chauffage de la boucle thermique HC1 permettant d'annuler la dérivée du coefficient COPglo, tout le chauffage sera réalisé avec la boucle thermique qui présente alors le meilleur coefficient de performance.

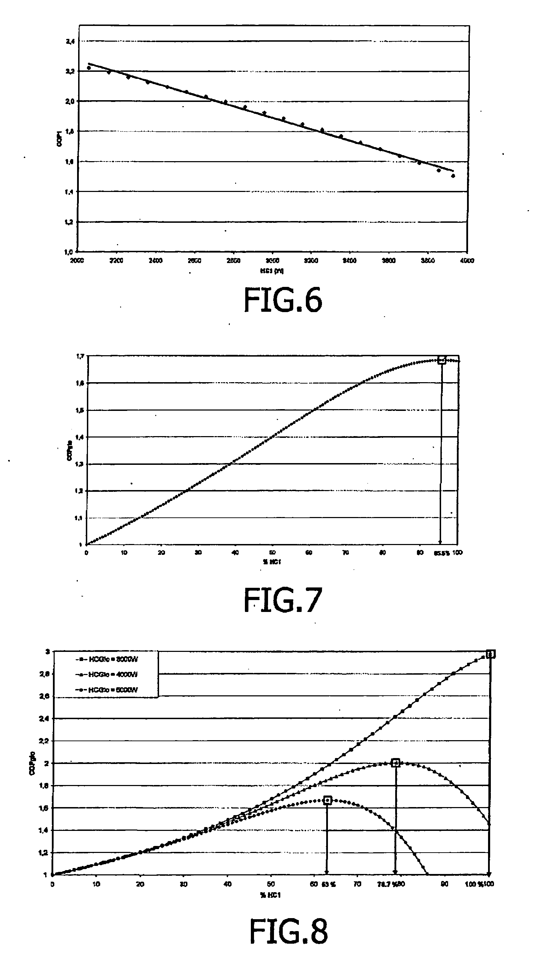

La figure 6 représente un exemple de variation du coefficient de performance COP1 d'une boucle thermique fonctionnant selon un principe de pompe à chaleur en fonction de la capacité de chauffage HC1 pour une température extérieure de -10°C, un débit massique dans le système de climatisation égal à 200 kg/h et une vitesse de l'air sur l'échangeur de chaleur externe égal à 1,7 m/s.

On remarque que cette courbe est décroissante et qu'elle peut être avantageusement approximée par une variation linéaire dont l'équation est ici : Y= -0.00038 x + 3.02607 avec un coefficient de détermination égal à 0,99403.

Dans ce cas, on peut calculer la valeur de la capacité de chauffage de la boucle thermique de la manière suivante :

$$HC1 = \frac{\sqrt{b} - b}{a} = \frac{\sqrt{3.026} - 3.026}{3.79.10^{-4}} = 3391W$$

Ainsi, on remarque que, dans les conditions opératoires de cet exemple, le coefficient de performance optimal pour une capacité de chauffage globale HCglo égale à 3 550 watts, sera atteint pour la répartition suivante : capacité de chauffage fournie par la boucle thermique HC1=3 391 watts et capacité de chauffage fournie par le dispositif électrique de chauffage complémentaire HC2=1 09 watts.

La figure 7 montre, dans les mêmes conditions que la figure 6, le coefficient de performance globale HCglo en fonction de la proportion de la capacité de chauffage fournie par la boucle thermique %HC1.

On remarque que, pour 95,5 % de la capacité de chauffage globale HCglo fournie par la boucle thermique 1, la courbe passe par un maximum.

On remarque que 95,5% de la capacité de chauffage requise HCglo, à savoir 3 550 watts, est précisément égale à 3 391 watts ainsi que déjà trouvé auparavant.

La figure 8 montre trois évolutions du coefficient de performance globale COPglo pour trois capacités de chauffage globales HCglo différentes : 3 000, 4 000 et 5 000 watts. Ces courbes sont présentées pour une température extérieure de -10°C, un débit d'air DmA dans le système de climatisation de 280 kg/h et une vitesse de l'air VA sur l'échangeur de chaleur externe 10 de 1,7 m/seconde. Ces courbes sont montrées en fonction du pourcentage de capacité de chauffage fournie par la boucle thermique %HC1.

On remarque que, de manière optimale, pour fournir une capacité de chauffage globale de 3 000 watts, il est plus avantageux de faire fournir la totalité de la capacité thermique à la boucle thermique 1. Dans ce cas, le dispositif électrique de chauffage complémentaire 2 ne sera pas utilisé. En outre, on note que le coefficient de performance obtenue sera de 3.

Pour fournir une capacité de chauffage globale de 4 000 watts, on remarque qu'il est optimal de faire fournir à la boucle thermique 1, 78,7 % de la capacité de chauffage totale requise HCglo, à savoir 3 848 watts. Ici, le dispositif électrique de chauffage complémentaire fournira 852 watts. Le coefficient de performance obtenue sera de 2 alors que, si la totalité de la capacité de chauffage HCglo était fournie par la boucle thermique 1 du système de climatisation, le coefficient de performance serait de 1,46.

Le contrôle selon l'invention du fonctionnement du dispositif électrique de chauffage complémentaire 2 a permis d'augmenter le coefficient de performance de 37 %.

Enfin, pour fournir une capacité de chauffage globale de 5 000 watts, il est optimal de faire fournir 63 % de la totalité de la capacité thermique requise HCglo par la boucle thermique 1 du système de climatisation, à savoir 3 148 watts.

Dans ce cas, le dispositif électrique complémentaire fournira 1 850 watts. Le coefficient de performance obtenu sera de 1,67.

On remarque enfin que diverses mises en oeuvre peuvent être réalisées selon les principes de l'invention.

**Revendications**

1. Procédé de contrôle d'un système de climatisation comprenant une boucle thermique (1) fonctionnant selon un mode pompe à chaleur, la boucle thermique (1) comprenant au moins un échangeur de chaleur externe (10), un échangeur de chaleur interne (11) ou un radiateur échangeur eau-air (15), un compresseur (12), un dispositif de détente (9) et un évaporateur (13), la boucle thermique (1) fournissant une capacité de chauffage de la boucle thermique (HC1), le système de climatisation comprenant un dispositif électrique de chauffage complémentaire (2,16) fournissant une capacité de chauffage du dispositif électrique (HC2,HC16) et un dispositif de contrôle (3) dans lequel est implémenté le procédé, le procédé comprenant les étapes suivantes :

   - réception d'une température de consigne,
   - détermination (E0) de la vitesse de l'air (VA) au niveau de l'échangeur de chaleur externe (10),
   - détermination (E0) de la température d'un flux d'air à l'intérieur du système de climatisation (Tfa),
   - détermination (E0) du débit d'air (DmA) sur l'échangeur de chaleur, interne (11) ou du radiateur échangeur eau-air (15)
   - calcul (E0) d'une capacité globale de chauffage (HCglo) à partir de la consigne de température, de la température du flux d'air (Tfa) et du débit d'air sur l'échangeur de chaleur interne (11)
   - détermination d'une capacité de chauffage (HC1) de la boucle thermique (1)
   - comparaison de la capacité de chauffage (HC1) de la boucle thermique (1) à la capacité globale de chauffage (HCglo)
   - réglage (E11,E12,E13,E14) de la capacité de chauffage (HC2,HC16) du dispositif électrique complémentaire (2,16), le cas échéant, en complément de la capacité de chauffage de la boucle thermique (HC1) si la capacité de chauffage (HC1) de la boucle thermique (1) est inférieure à la capacité globale de chauffage (HCglo).

2. Procédé selon la revendication 1, dans lequel on effectue un plafonnement (E3,E4,E5) de la capacité de chauffage de la boucle thermique (HC1) à la capacité de chauffage de la boucle thermique annulant la dérivée par rapport à cette capacité de chauffage (HC1) de la boucle thermique (1) du coefficient global de performance (COPglo) dans le cas où cette dérivée s'annule pour une capacité de chauffage de la boucle thermique (HC1) inférieure à la capacité globale calculée (HCglo),

3. Procédé selon la revendication 1 ou 2, dans lequel il comprend une étape préalable d'estimation de deux coefficients a et b d'une approximation linéaire du coefficient de performance de la boucle thermique (COP1) en fonction de la capacité de chauffage de la boucle thermique (HC1), ces coefficients étant estimés, chacun, en fonction des composants de la boucle thermique, pour au moins une pluralité de vitesses de l'air dans l'échangeur de chaleur externe (VA), une pluralité de températures du flux d'air (Tfa) et une pluralité de débits massique d'air dans l'échangeur de chaleur interne (DmA), le procédé comprenant alors, après les étapes de mesures (E0), une étape de détermination (E1), parmi les coefficients estimés, des coefficients de l'approximation du coefficient de performance de la boucle thermique (COP1) correspondants aux paramètres mesurés, la capacité de chauffage de la boucle thermique (HC1) étant alors plafonnée à $(b^{1/2}-b)/a$.

**4.** Procédé selon la revendication 3, dans lequel le système de climatisation comprenant une boucle thermique air-eau et disposant d'un dispositif électrique de chauffage complémentaire de l'eau (16), les coefficients a et b sont également estimés en fonction de la capacité de chauffage globale requise (HCglo).

**5.** Procédé selon l'une des revendications 1 à 3, dans lequel le système de climatisation est choisi parmi les systèmes de climatisation comprenant une boucle thermique air-air et munis d'un dispositif électrique de chauffage de l'air (2), les systèmes de climatisation comprenant une boucle thermique air-eau et munis d'un dispositif électrique de chauffage de l'air (2), les systèmes de climatisation comprenant une boucle thermique air-eau et munis d'un dispositif électrique de chauffage de l'eau (16) avec ou sans dispositif électrique de chauffage de l'air (2).

**6.** Programme d'ordinateur comportant des instructions pour l'exécution des étapes du procédé selon l'une quelconque des revendications 1 à 4 lorsque ledit programme est exécuté par un ordinateur.

**7.** Support d'enregistrement lisible par un ordinateur sur lequel est enregistré un programme d'ordinateur comprenant des instructions pour l'exécution des étapes du procédé selon l'une quelconque des revendications 1 à 4.

**Claims**

**1.** Method for controlling an air conditioning system comprising a thermal loop (1) operating in a heat pump mode, the thermal loop (1) comprising at least one external heat exchanger (10), one internal heat exchanger (11) or a water-air exchanging radiator (15), one compressor (12), one expansion device (9) and one evaporator (13), the thermal loop (1) supplying a thermal loop heating capacity (HC1), the air conditioning system including a complementary electric heating device (2, 16) supplying a heating capacity from the electric device (HC2, HC16) and a control device (3) in which the method is implemented, the method comprising the following steps:

- reception of a setpoint temperature,
- determination (E0) of the air speed (VA) at the external heat exchanger (10),
- determination (E0) of the temperature of an air stream inside the air conditioning system (Tfa),
- determination (E0) of the air flow rate (DmA) on the internal heat exchanger (11) or the water-air exchanging radiator (15),
- computation (E0) of a global heating capacity (HCglo) from the temperature setpoint, the temperature of the air stream (Tfa) and the air flow rate on the internal heat exchanger (11),
- determination of a heating capacity (HC1) of the thermal loop (1),
- comparison of the heating capacity (HC1) of the thermal loop (1) to the global heating capacity (HCglo),
- setting (E11, E12, E13, E14) of the heating capacity (HC2, HC16) of the complementary electric device (2, 16), where appropriate, in addition to the heating capacity of the thermal loop (HC1) if the heating capacity (HC1) of the thermal loop (1) is less than the global heating capacity (HCglo).

**2.** Method according to Claim 1, in which the heating capacity of the thermal loop (HC1) is capped (E3, E4, E5) at the heating capacity of the thermal loop, cancelling the drift relative to this heating capacity (HC1) of the thermal loop (1) of the global performance coefficient (COPglo) in the case where this drift is cancelled for a heating capacity of the thermal loop (HC1) less than the computed global capacity (HCglo).

**3.** Method according to Claim 1 or 2, in which it comprises a preliminary step of estimating two coefficients a and b of a linear approximation of the performance coefficient of the thermal loop (COP1) as a function of the heating capacity of the thermal loop (HC1), these coefficients each being estimated as a function of the components of the thermal loop, for at least a plurality of air speeds in the external heat exchanger (VA), a plurality of temperatures of the air stream (Tfa) and a plurality of mass air flow rates in the internal heat exchanger (DmA), the method then comprising, after the measurement steps (E0), a step of determining (E1), from the estimated coefficients, the coefficients of the approximation of the performance coefficient of the thermal loop (COP1), said coefficients corresponding to the measured parameters, the heating capacity of the thermal loop (HC1) then being capped at $(b^{1/2}-b)/a$.

**4.** Method according to Claim 3, in which the air conditioning system comprising an air-water thermal loop and having a complementary electric water heating device (16), the coefficients a and b are also estimated as a function of the required global heating capacity (HCglo).

**5.** Method according to one of Claims 1 to 3, in which the air conditioning system is chosen from the air conditioning systems comprising an air-air thermal loop and provided with an electric air heating device (2), the air conditioning systems comprising an air-water thermal loop and provided with an electric air heating device (2), the air conditioning systems comprising an air-water thermal loop and provided with an electric water heating device (16) with or without electric air heating device (2).

6. Computer program comprising instructions for executing the steps of the method according to any one of Claims 1 to 4 when said program is run by a computer.

7. Computer-readable storage medium on which a computer program is stored comprising instructions for executing the steps of the method according to any one of Claims 1 to 4.

**Patentansprüche**

1. Verfahren zur Steuerung einer Klimaanlage, die eine Wärmeschleife (1) enthält, welche in einer Wärmepumpen-Betriebsart arbeitet, wobei die Wärmeschleife (1) mindestens einen externen Wärmetauscher (10), einen internen Wärmetauscher (11) oder einen Wasser-Luft-Wärmetauscher-Radiator (15), einen Kompressor (12), eine Expansionsvorrichtung (9) und einen Verdampfer (13) enthält, wobei die Wärmeschleife (1) eine Heizleistung der Wärmeschleife (HC1) liefert, wobei die Klimaanlage eine komplementäre elektrische Heizvorrichtung (2, 16), die eine Heizleistung der elektrischen Vorrichtung (HC2, HC16) liefert, und eine Steuervorrichtung (3) enthält, in der das Verfahren durchgeführt wird, wobei das Verfahren die folgenden Schritte enthält:

- Empfang einer Solltemperatur,
- Bestimmung (E0) der Luftgeschwindigkeit (VA) im Bereich des externen Wärmetauschers (10),
- Bestimmung (E0) der Temperatur eines Luftstroms innerhalb der Klimaanlage (Tfa),
- Bestimmung (E0) des Luftdurchsatzes (DmA) im Wärmetauscher, dem internen (11) oder dem Wasser-Luft-Wärmetauscher-Radiator (15),
- Berechnung (E0) einer globalen Heizleistung (HCglo) ausgehend vom Temperatursollwert, von der Temperatur des Luftstroms (Tfa) und vom Luftdurchsatz im internen Wärmetauscher (11),
- Bestimmung einer Heizleistung (HC1) der Wärmeschleife (1),
- Vergleich der Heizleistung (HC1) der Wärmeschleife (1) mit der globalen Heizleistung (HCglo),
- ggf. Einstellung (E11, E12, E13, E14) der Heizleistung (HC2, HC16) der komplementären elektrischen Vorrichtung (2, 16) als Ergänzung der Heizleistung der Wärmeschleife (HC1), wenn die Heizleistung (HC1) der Wärmeschleife (1) niedriger als die globale Heizleistung (HCglo) ist.

2. Verfahren nach Anspruch 1, bei dem eine Festlegung der Obergrenze (E3, E4, E5) der Heizleistung der Wärmeschleife (HC1) auf die Heizleistung der Wärmeschleife durchgeführt wird, die die Ableitung bezüglich dieser Heizleistung (HC1) der Wärmeschleife (1) vom globalen Leistungsfähigkeitskoeffizienten (COPglo) in dem Fall aufhebt, in dem diese Ableitung sich für eine Heizleistung der Wärmeschleife (HC1) aufhebt, die niedriger als die berechnete globale Leistung (HCglo) ist.

3. Verfahren nach Anspruch 1 oder 2, bei dem es einen vorhergehenden Schritt der Schätzung von zwei Koeffizienten a und b einer linearen Approximation des Leistungsfähigkeitskoeffizienten der Wärmeschleife (COP1) abhängig von der Heizleistung der Wärmeschleife (HC1) enthält, wobei diese Koeffizienten je abhängig von den Komponenten der Wärmeschleife, für mindestens eine Vielzahl von Luftgeschwindigkeiten im externen Wärmetauscher (VA), eine Vielzahl von Temperaturen des Luftstroms (Tfa) und eine Vielzahl von Luftmassenströmen im internen Wärmetauscher (DmA) geschätzt werden, wobei das Verfahren dann nach den Messschritten (E0) einen Schritt der Bestimmung (E1), unter den geschätzten Koeffizienten, der Koeffizienten der Approximation des Leistungsfähigkeitskoeffizienten der Wärmeschleife (COP1) enthält, die den gemessenen Parametern entsprechen, wobei die Heizleistung der Wärmeschleife (HC1) dann auf eine Obergrenze $(b^{1/2}-b)/a$ festgelegt wird.

4. Verfahren nach Anspruch 3, bei dem, wenn die Klimaanlage eine Luft-Wasser-Wärmeschleife enthält und über eine komplementäre elektrische Heizvorrichtung des Wassers (16) verfügt, die Koeffizienten a und b ebenfalls abhängig von der erforderlichen globalen Heizleistung (HCglo) geschätzt werden.

5. Verfahren nach einem der Ansprüche 1 bis 3, bei dem die Klimaanlage aus den Klimaanlagen, die eine Luft-Luft-Wärmeschleife enthalten und mit einer elektrischen Heizvorrichtung der Luft (2) versehen sind, den Klimaanlagen, die eine Luft-Wasser-Wärmeschleife enthalten und mit einer elektrischen Heizvorrichtung der Luft (2) versehen sind, den Klimaanlagen, die eine Luft-Wasser-Wärmeschleife enthalten und mit einer elektrischen Heizvorrichtung des Wassers (16) mit einer oder ohne eine elektrische Heizvorrichtung der Luft (2) versehen sind, ausgewählt wird.

6.  Computerprogramm, das Anweisungen zur Ausführung der Schritte des Verfahrens nach einem der Ansprüche 1 bis 4 aufweist, wenn das Programm von einem Computer ausgeführt wird.

7.  Computerlesbarer Aufzeichnungsträger, auf dem ein Computerprogramm aufgezeichnet ist, das Anweisungen zur Ausführung der Schritte des Verfahrens nach einem der Ansprüche 1 bis 4 enthält.

FIG.1

FIG.2

FIG.3

VA ──────→

$T_{FA}$ ──────→

DmA ──────→

HCglo ──────→

┌─────────────┐
│             │
│      3      │
│             │
└─────────────┘

──────→ HC1

──────→ HC2 ou HC16

## FIG.4

E0  ┌─────────────────────┐
    │ $T_{FA}$, VA, DmA, HCglo │
    └─────────────────────┘
              │
E1  ┌─────────────────────┐
    └─────────────────────┘
              │ a,b
E2  ┌─────────────────────┐
    └─────────────────────┘
              │ $HC1 = \dfrac{\sqrt{b} - b}{a}$

E3      ◇ HC1<HCglo ? ◇ ───────N──────→  E4 ┌─────────┐
              │ O                           │ HC1=HCglo │
              │                             └─────────┘
              ▼                                  │
E5  ┌──────────────────┐                         │
    │ $HC1 = \dfrac{\sqrt{b}-b}{a}$ │─────────────┘
    └──────────────────┘                         │
                                                 ▼
                                    E6    ◇ AIr/eau ? ◇
                                          O ╱         ╲ N
                                           ╱           ╲
E11 ┌──────────────────────┐              ▼             ▼
    │ $HC2 = HCglo - HC1$   │    E7 ┌──────────────┐  ┌──────────────┐ E8
    │ ou $HC16 = HCglo - HC1$ │      │ HC1_m=f(DmA,  │  │ HC1_m=f(DmA,  │
    └──────────────────────┘        │ Teau_i, Teau_o)│  │ TaIr_i, TaIr_o)│
              │                     └──────────────┘  └──────────────┘
E12 ┌──────────────────────┐               └──────┬──────┘
    │    HC2_m ou HC16_m    │                      │
    └──────────────────────┘                       ▼
              │                         E9    ◇ HC1<>HC1_m ? ◇
              ▼                                      │
E13    ◇ HC2<>HC2_m ?              ┌──────────────┐
       ◇ HC16<>HC16_m ? ◇          │              │ E10
              │                    └──────────────┘
              ▼                            │ N12
E14 ┌──────────────────────┐
    └──────────────────────┘
              │ HC2 ou
                HC16

## FIG.5

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5501267 A